Europäisches Patentamt

European Patent Office

Office européen des brevets

(19)

(11) Veröffentlichungsnummer: **0 085 774**
**B1**

(12) **EUROPÄISCHE PATENTSCHRIFT**

(45) Veröffentlichungstag der Patentschrift:
**16.07.86**

(21) Anmeldenummer: **82111509.4**

(22) Anmeldetag: **11.12.82**

(51) Int. Cl.⁴: **F 24 D 17/00, F 24 D 19/10**

(54) Verfahren zur energiesparenden Warmwasserbereitung in Wohnbauten, insbesondere in Gross- und Mittelgrossbauten, und Einrichtung zur Durchführung des Verfahrens.

(30) Priorität: **08.01.82 CH 106/82**

(43) Veröffentlichungstag der Anmeldung:
**17.08.83 Patentblatt 83/33**

(45) Bekanntmachung des Hinweises auf die Patenterteilung:
**16.07.86 Patentblatt 86/29**

(84) Benannte Vertragsstaaten:
**AT BE CH DE FR GB IT LI LU NL SE**

(56) Entgegenhaltungen:
**DE - A - 2 231 231**
**DE - B - 2 930 187**
**FR - A - 2 468 074**

(73) Patentinhaber: **Gössi, Hans, Oberdorf 25,**
**CH-6403 Küssnacht am Rigi (CH)**

(72) Erfinder: **Gössi, Hans, Oberdorf 25, CH-6403 Küssnacht**
**am Rigi (CH)**

(74) Vertreter: **EGLI-EUROPEAN PATENT ATTORNEYS,**
**Horneggstrasse 4, CH-8008 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt im Gebiet des Wärmeenergietransportes und bezieht sich auf ein Verfahren zur energiesparenden Warmwasserbereitung, deren Bereitstellung am Zielort, insbesondere bei Warmwasserbenützern in grösseren und grossen Wohnhäusern, und einer Warmwasserversorgungseinrichtung zur Durchführung des angegebenen Verfahrens.

Während den Zeiten mit niedrigen Energiekosten war die Warmwasseraufbereitung in Wohnhäusern eine Selbstverständlichkeit nebensächlichen Ranges, da jederzeit genügend kostengünstige Energie einfach da war, um Gebrauchswasser irgendwie auf Heisswassertemperatur zu erwärmen – nicht selten auf unnötig hohe Brühwassertemperaturen, die mit viel kaltem Wasser auf brauchbare Mischtemperatur zu senken waren – wobei der Wirtschaftlichkeit um so weniger Beachtung zukam, je kleiner ein Wohnobjekt war, beispielsweise ein Einfamilienhaus.

Bei grösseren Wohnobjekten, grösseren Hotels etwa, begann auch bei relativ günstigen Energiegrundkosten die Warmwasseraufbereitung spürbar in den Kosten für Aufwendung aufzutreten, so dass hier doch schon frühzeitig Vorkehrungen zur besseren Wirtschaftlichkeit getroffen wurden. Diese Vorkehrungen beschränkten sich aber hauptsächlich auf Massnahmen zur Herabsetzung der Leitungsverluste durch adäquates Isolieren, heute ein bare Selbstverständlichkeit. Kaum angewendet wurden Mittel, die der Dynamik des Warmwasserverbrauchs Rechnung trugen.

So wurde erst 1973 durch die DE-A 2 231 231 eine automatische Mischwasseranlage bekannt, die mit dem Ziel, die Temperaturunterschiede des entnommenen Mischwassers sehr gering zu halten, indirekt zu beträchtlichen Energieeinsparungen führte. Sehr eindrücklich wird darin geschildert, welche Massnahmen beispielsweise in Gemeinschaftsduschanlagen damals noch getroffen wurden, um dem Benützer physiologisch brauchbare Temperaturen zu sichern.

Die beschriebene Lehre befasst sich mit der Aufgabe, bei einer automatischen Mischwasseranlage mit Leitungen für die Zufuhr von Kalt- und Heisswasser mit Organen für die Regelung der Mischung von Kalt- und Heisswasser die Temperaturunterschiede des entnommenen Mischwassers sehr gering zu halten, und zwar gleichgültig, ob im Verhältnis zur maximal möglichen Wasserabgabe viel oder nur sehr wenig an Mischwasser abgenommen wird. Dies kann durch einen in sich geschlossenen Mischwasserkreislauf mit Einspeisungsmöglichkeit für Mischwasser und Entnahmezapfstellen gelöst werden, wobei zusätzlich dieser Mischwasserkreislauf an die Sekundärseite eines Wäremeaustauschers angeschlossen ist. Durch die im geschlossenen Mischwasserkreislauf umlaufende Menge an Mischwasser, welches die gewünschte Abnahmetemperatur besitzt, erfolgt bereits ein Temperaturausgleich, wobei Wärmeverluste durch den Wärmeaustauscher ausgeglichen werden. Ein wesentlicher Vorteil besteht auch darin, dass die Anlage unabhängig von einem Boiler oder Warmwasserspeicher ist. Sie benötigt daher keine Verbindungsleitungen von Mischwasser zu einem Boiler, da die Mischwasserzirkulation einen eigenen funktionstüchtigen und geschlossenen Kreislauf bildet.

Seither haben die Preise für Rohenergie kräftig angezogen; keine dieser früheren, so einfachen, mitunter aber brutalen technischen Lösungen ist heute noch tragbar. Subtilere und weitaus mehr durchdachte Lösungswege wurden inzwischen vorgeschlagen und werden heute angewendet. Der Einsatz von alternativen Energien für Heizungs- und Warmwasseraufbereitungszwecke nimmt immer breiteren Raum ein, wobei insbesondere Energie aus niedrigtemperaturerzeugenden Aggregaten in die bekannten hochtemperaturerzeugenden Systeme eingekoppelt werden.

Die Wärmepumpe ist neben Solarkollektoren das verbreitetste Mittel dazu. Die Schwierigkeiten jedoch, um durch die Wärmepumpe beispielsweise zu einer wirklich kostengünstigeren Warmwasseraufbereitung zu gelangen, sind z.B. aus einem Artikel der Fachliteratur «Wärmepumpe, Argumente für Beratung und Verkauf in Einfamilienhäusern» (Haustechnik, 12, 1981, Nr. 10, Seite 33 ff.) zu ersehen. Das entscheidende Problem im Einsatz von Wärmepumpen besteht darin, dass ohne Warmwasserspeicherung Wärmepumpen die Anforderung nach Warmwasserkomfort mit den derzeit üblichen Heizleistungen zwischen 3 kW und 10 kW nicht erfüllen. Bei ausreichendem Speichervolumen können dagegen Geräte mit niedriger Heizleistung einen hohen Tagesbedarf decken, wenn die Zapfpausen genügend lang sind. Eine mögliche Zusatzheizung verbessert die Warmwasserleistung aber nur dann, wenn zwischen zwei grossen Wasserentnahmen genügend Zeit zum Aufheizen bleibt. Auch bei annehmbaren Leistungszahlen bleibt das Speicherproblem dahingehend bestehen, dass genügend grosse Wasserspeicher verhältnismässig teuer sind, und die Amortisationszeit zu lange dauert. Dies bringt es mit sich, dass der Wärmepumpeneinsatz bei grösseren Objekten wie beispielsweise Mehrfamilienhäusern oder auch Hotels am Speicherproblem, d.h. am Kosten/Nutzen-Verhältnis, scheitert.

Die Einsatzmöglichkeiten von Sonnenkollektoren zur Warmwasserbereitung findet man unter anderem in Kapitel 17, Sonnenenergie-Warmwasseraufbereitung, Einsatzmöglichkeiten, Seite 456 ff., beschrieben. Auch hier zeigt sich deutlich ein zweifaches Problem: Die Beschränkung auf kleine Wohnobjekte und das Spitzenlastproblem.

Es ist die Aufgabe der Erfindung, ein Verfahren zur energiesparenden und äusserst kostengünstigen Warmwasseraufbereitung und Bereitstellung für den Benützer auch in grösseren bis grossen Wohnobjekten anzugeben. Es ist weiter Aufgabe der Erfindung, eine Einrichtung zur Durchführung des energiesparenden Verfahrens zur Warmwasseraufbereitung zu schaffen. Die Aufgabe wird durch die in den unabhängigen Patentansprüchen angegebene Erfindung gelöst.

Fig. 1 zeigt einen Teilaspekt des Verfahrens gemäss Erfindung.

Fig. 2 zeigt ein Beispiel des Verbrauchs von NT-Wasser und HT-Wasser gemäss einem 24-Stunden-Programm.

Fig. 3 zeigt das Beispiel einer Wärmespeicherung von Solarwärme für NT-Wasser und Nachtstromwärme für HT-Wasser.

Fig. 4 zeigt einen Ausschnitt eines Messdiagramms.

Fig. 5 zeigt eine Übersicht einer beispielsweisen Einrichtung zur Durchführung des Verfahrens gemäss der Erfindung.

Fig. 6 zeigt ein Hydraulikschema, in dem für die Niedertemperatur Solarwärme verwendet wird.

Fig. 7 zeigt ein Hydraulikschema wie Figur 6 in einfacherer Ausführung und mit Wärmepumpenenergie bewirtschaftetem Niedertemperaturboiler.

Fig. 8 zeigt ein Hydraulikschema wie in Figur 7 mit Sekundärkreislauf für das Mischwasser.

Fig. 9 zeigt ein weiteres Hydraulikschema, und

Fig. 10 zeigt ein Hydraulikschema, ähnlich wie in Fig. 6, mit zusätzlicher Ausrüstung.

Die spezifische Wärme von Wasser ist besonders gross; um 1 kg Wasser um 1°C zu erwärmen, sind rund 45 KJ erforderlich. Eine einfache Rechnung zeigt, dass man mit dieser Energie 1 kg auch um 427 m heben oder auf 400 km/h beschleunigen könnte. Zur Erwärmung von Wasser (und auch für andere Heizzwecke) sind Energiemengen erforderlich, die erheblich über den anderen Formen des täglichen Energiebedarfs liegen. Daraus folgt, dass Energiesparen vor allem beim Heizen bzw. bei der Verwendung des energiehaltigen Warmwassers möglich ist. So wie das hervorragende Vermögen des Wassers als Transportmittel von Wärmeenergie zum Bestimmungsort gute Dienste leistet, so wirkt sich auch der Abtransport von Energie aus einem System durch das Wasser stark nachteilig aus.

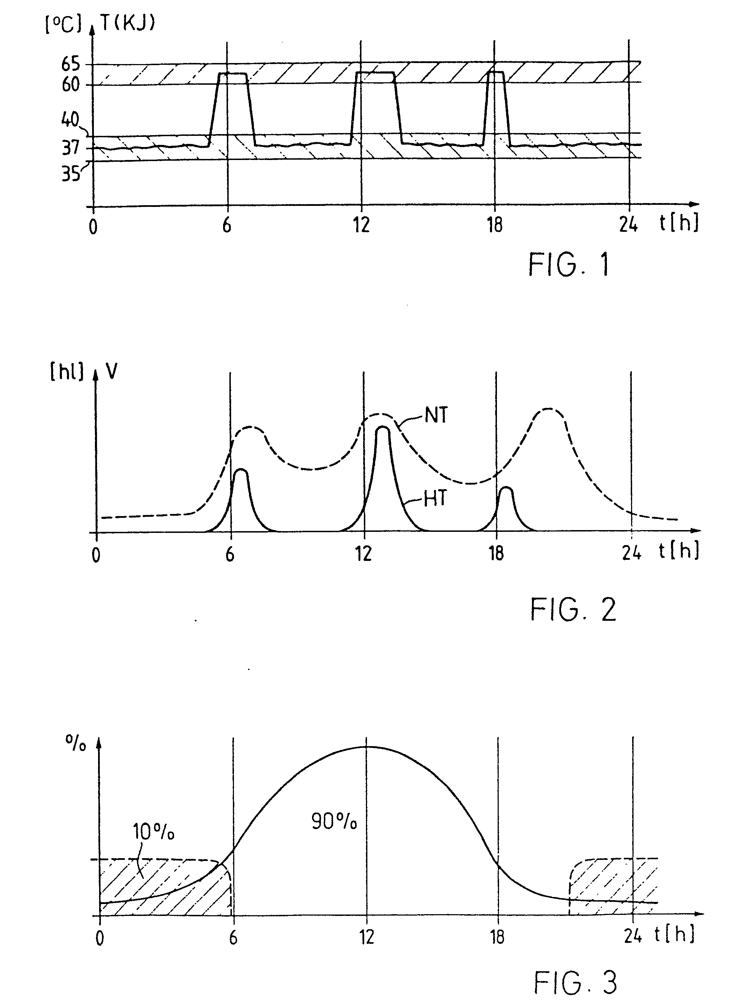

Figur 1 zeigt einen Teilaspekt des Verfahrens gemäss der Erfindung. Ein vorgegebenes Wassertemperaturangebot in Abhängigkeit der Zeit und in diesem Beispiel in Abhängigkeit des 24-Stunden-Zyklus eines Kalendertages. Die innere Energie des am Zielort, den Zapfstellen, angebotenen Wassers ist auf der Ordinate angegeben, vorzugsweise in zwei praktikablen Temperaturbereichen, nämlich dem Temperaturbereich rund um die physiologische Temperatur von 37°C in der Spanne von 38°C bis 44°C, hauptsächlich für Körperhygiene vorgesehen; sowie dem Temperaturbereich von 60°C bis 65°C, also wesentlich über den physiologischen bzw. Körperhygienetemperaturen liegenden Bereich, vorgesehen für Hygienehandlungen an nichtbiologischen Objekten. Die eine Wassertemperatur stammt von Wasser aus einem Niedertemperaturspeicher, die andere aus einem Hochtemperaturspeicher.

Dazwischen sind selbstverständlich alle Mischtemperaturen möglich und herstellbar.

Beispielsweise sind um die Tageszeiten 6, 12 und 18 Uhr Spitzen im Verlauf des Wassertemperaturangebotes eingezeichnet, die um diese Tageszeiten für eine eingeschränkte Zeitdauer, beispielsweise zu Essenszeiten, Wasser von höherer Temperatur bereitstellen. Ganz selbstverständlich können solcherart «Programme» für Hotels, Kliniken, Mehrfamilienhäuser, Einfamilienhäuser, Badeanstalten usw. entsprechend individuell ausgearbeitet sein. Das vorliegende Beispiel mag sich auf ein Mehrfamilienhaus beziehen, in dem sich um die Essenszeit ein zusätzlicher Bedarf an heissem Wasser einstellt. Dieser Bedarf ist schematisch als Spitzenbedarf an Wärmeenergie in drei Bedarfsspitzen aufzufassen, nicht aber als Spitzenbedarf an Wasservolumen.

Der Spitzenbedarf an Wasservolumen kann durchaus vom Schema der Figur 1 abweichen, beispielsweise durch Duschen und Vollbäder zwischen den Hochtemperaturbedarfsspitzen, wobei zu diesen für Geschirrwaschzwecke und zum Kochen volumenmässig wesentlich weniger Wasser verbraucht wird. Allerdings soll durch einen Split von Niedrig- und Hochtemperaturangebot das Energieprofil besser an den Bedarf angepasst werden. Weiterhin soll auch ein solcher Split dazu beitragen, erfindungsgemäss billige Energie – und das ist zumeist Niedrigtemperaturenergie – optimal in das zu erzielende Energieprofil im Sinne eines optimalen Energieangebotes einzubeziehen.

Der Verbrauch von NT-Wasser und HT-Wasser im 24-Stunden-Zyklus ist in Figur 2 festgehalten. Von nachts 11 Uhr bis morgens 5 Uhr sinkt der NT-Wasserverbrauch in einem Mehrfamilienhaus (auch in einem Hotel) auf ein Minimum ab; der HT-Wasserverbrauch beträgt durch die Einschränkung des Angebots, immer gemäss Beispiel, gleich Null. Die dem System entziehbare Wärmemenge ist also nach oben begrenzt, und zwar einmal durch die Maximaltemperatur und dann noch durch die Speicherkapazität. Beide Grenzen sind als solche festzulegen gemäss Objekt und Verbrauchsgewohnheiten.

Das Ht-Wasser-Programm ist in diesem Beispiel starr auf drei Spitzen festgelegt, das NT-Wasser-Programm dagegen flexibel. Denkbar wäre in einer Weiterentwicklung ein starres Energieprogramm über den 24-Stunden-Zyklus verteilt, derart, dass in einer inneren Dynamik wohl genügend Flexibilität eingebracht ist, aber in Form starrer Randbedingungen der Energieverbrauch rahmenmässig begrenzt wird. Es liesse sich damit kostenmässig ein Objekt, beispielsweise ein Mehrfamilienhaus, fest einstellen; eine systeminterne Verschiebung der Wärmeenergie sorgt dann dafür, dass die Energie gerade dort ist, wo sie gebraucht wird. Dabei wird möglichst wenig innere Wärme als Abwärme aus dem Gesamtsystem ausgeschieden. Dies wird beispielsweise durch die Kopplung von zwei und mehr Grundeinheiten gemäss der Erfindung herbeigeführt. Die Kopplung erfolgt über die Steuer- oder Rechnereinheiten mit hierarchisch gestuften Schaltungen.

Dass gemäss dem Beispiel in Figur 2 der NT-Wasserspitzenverbrauch mit dem Hauptverbrauch des HT-Wassers zusammenfällt, hängt mit den im Beispiel angenommenen Gewohnheiten zusammen.

Die stetige Bereitstellung von beinahe beliebigen Warmwassermengen an den Zapfstellen erfordert entsprechende Puffer- oder Speichervolumen in einer Grösse, dass eine grosse Variation von Zapfzeiten und Zapfpausen bewältigt werden kann. In einem gemäss Verfahren und Einrichtung ausgestatteten Mehrfamilienhaus ist es möglich, bis zu 80% des Warmwasserbedarfs aus dem NT-Boiler oder -Speicher zu decken; nur 20% des Heisswasserbedarfs stammt aus dem mit teurer Energie arbeitenden HT-Boiler oder -Speicher. Dabei ist vorausgesetzt, dass das Warmwasserangebot den heutigen Hygienebedürfnissen entsprechend ausreichend ist. Dies ist eine bemerkenswerte Tatsache, wenn man bedenkt, wie kostengünstig Niedrigtemperaturwasser herzustellen ist.

Ein Beispiel für die Aufspeicherung von NT- und HT-Energie als innere Energie im Wasser zeigt die Darstellung gemäss Figur 3. Wiederum im 24-Stunden-Zyklus ist eine Energiezuführung für den NT-Speicher aus der Solarenergie, naturgemäss in den 12 Stunden zwischen 6 Uhr und 18 Uhr, dargestellt sowie eine Energiezuführung für den HT-Speicher, beispielsweise mit elektrischem Strom zum günstigen Nachttarif, in diesem Beispiel zwischen 20 Uhr abends und 5 Uhr frühmorgens. Die Speicherung beträgt 90% des Gesamtenergiebedarfs als NT-Wärme und 10% als HT-Wärme. Selbstredend ist dabei die adäquate Isolierung sowie ein Ausgleich der Speicher- und Leitungsverluste durch die zu minimierenden teuren Energieträger wie beispielsweise Öl oder Elektrizität.

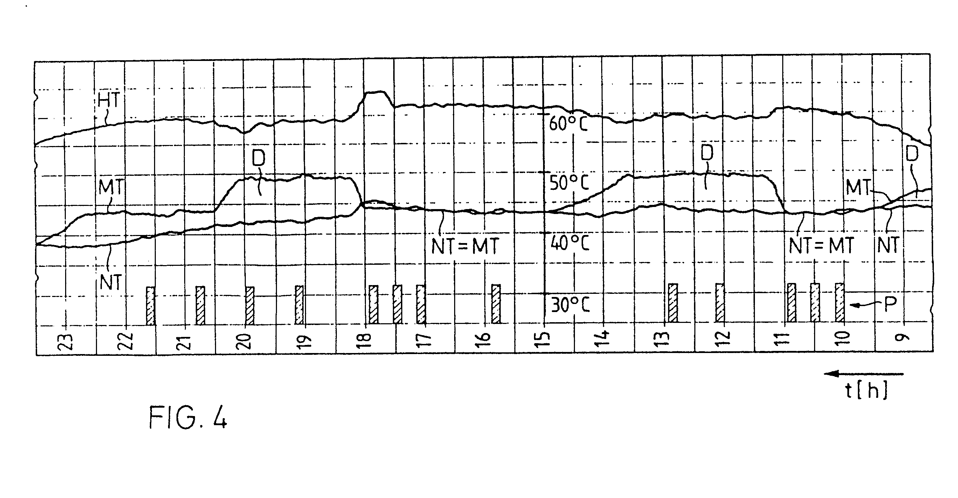

In Figur 4 ist ein Ausschnitt eines Messstreifens dargestellt, der bei Messungen am oben erwähnten Mehrfamilienhaus gewonnen wurde. Auf der Ordinate ist die Temperatur in °C angegeben, auf der Abszisse die Zeit in h im 24-Stunden-Zyklus. Der Ausschnitt bezieht sich auf einen Zeitraum von 9 Uhr morgens bis nach 23 Uhr in der Nacht. Der Eigenschaft des Messgerätes entsprechend verläuft die Zeit, der üblichen Darstellung entgegengesetzt, von rechts nach links.

Drei dargestellte Temperaturkurven zeigen die Temperatur für Niedertemperaturwasser durch die Kurve NT, Hochtemperaturwasser durch die Kurve HT und schliesslich das Mischwasser durch die Kurve MT. Die auf der Abszisse aufgebrachten Pulsgruppen P stellen in stilisierter Form Energiepulse dar, die durch Ein- und Ausschalten bzw. einer Ölfeuerung oder elektrischen Stroms in das System, in diesem Fall die HT-Stufe, eingebracht werden. Die Pulsbreite entspricht im wesentlichen der Darstellung auf der Zeitachse und beträgt 10 bis 20 Minuten; der Abstand zwischen zwei Energiepulsen richtet sich nach Bedarf, entweder durch den Benützer herbeigeführten Wärmeentzug aus dem System oder durch unvermeidliche Wärmeverluste des Systems.

Auf der rechten Seite der Figur 4 beginnend, erkennt man die auf die NT-Kurve sich absenkende MT-Kurve und die darin eingeschlossene, dreieckförmige Fläche D. Diese Fläche bezeichnet die energetische Defizitdeckung D aus der Sicht der NT-Stufe. Das Angebot von wärmerem Wasser am frühen Morgen, beispielsweise 6 Uhr, wird – da die NT-Stufe dies jetzt nicht aufbringen kann – von der HT-Stufe gedeckt. Ab 9.30 Uhr ist NT = MT, d.h. der Warmwasserbedarf wird gänzlich aus der NT-Stufe gedeckt. Zwischen 10 und 11 Uhr wird der Ölbrenner in Zeitabständen, beispielsweise dreimal, eingeschaltet, um die durch die HT-Kurve angezeigte Temperatur in der HT-Stufe auf beispielsweise etwas über 60°C zu bringen. Um 11 Uhr wird nun programmgemäss die Mischwassertemperatur MT auf beispielsweise 50°C angehoben, also dem NT-Wasser HT-Wasser beigemischt. Erfindungsgemäss wird nun nicht kaltes mit heissem Wasser vermischt, sondern es wird an der Mischstufe dem heissen Wasser vorgewärmtes Wasser beigemischt, wobei das vorgewärmte Wasser mit Alternativenergie, also zu niedrigen Kosten, hergestellt wird.

Das Umschalten der entsprechenden Stellorgane und Einschalten der betroffenen Umwälzpumpen, z.N. nach Nachtabschaltung am Morgen, lässt im Mischwasserkreislauf die Temperatur rasch ansteigen bis zur gewünschten Höhe. Ein leichtes Abfallen der HT-Kurve zeigt den Energieentzug in der HT-Stufe an; die auf der Abszisse aufgebrachten Energiepulse zeigen den Ersatz der weggeführten Energie an. Um 13.30 Uhr werden die Stellorgane programmgemäss umgeschaltet, und die Temperatur im MT-Kreislauf sinkt langsam ab, und zwar abhängig von der MT-Wasserentnahme und dem Energieverlust in der MT-Stufe. Bis 18 Uhr versorgt die NT-Stufe das Wohnhaus mit warmem Wasser. Das der Einrichtung zugeordnete Regelsystem sorgt für die Einschaltung der zur Aufrechterhaltung der programmierten Temperaturen nötigen Energiepulse. Zu beachten wäre die markante Korrelation der drei Kurven beim Umschalten zur Stunde 18 Uhr.

Anschliessend erfolgt die normale Nachtabsenkung, wobei zu bemerken ist, dass kein Hochtemperaturwasser in der Nacht entnommen wird; alles verwendete Warmwasser stammt entweder aus dem Mischwasserkreislauf bzw. aus dem Niedrigtemperaturspeicher.

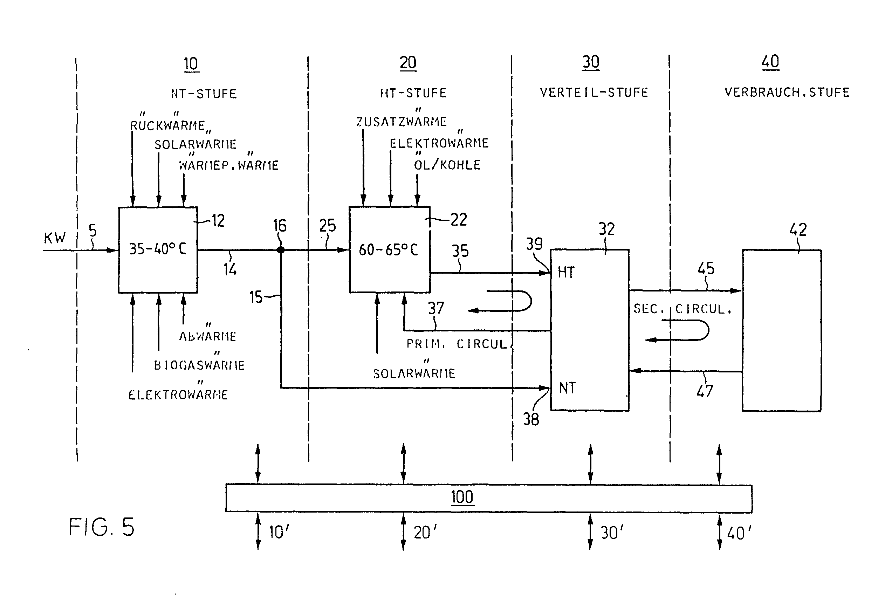

Figur 5 zeigt nun die Übersicht einer beispielsweisen Einrichtung zur Durchführung des Verfahrens gemäss der Erfindung. Das Rohwasser KW gelangt über eine Zuführung 5 zuerst in eine NT-Stufe 10, in der es mittels Wärme aus NT-Wärmequellen, das sind beispielsweise Abwasserrückwärme, Ab- oder Fernwärme, Solarwärme, Wärmepumpenwärme, vorgewärmt wird. Höherwertige, jedoch kostengünstige Energie kann ebenfalls verwendet werden, wie beispielsweise Biogaswärme oder Niedertarifelektrowärme. Das Rohwasser KW wird dabei von einer Temperatur zwischen 10°C und 20°C auf eine Temperatur von ca. 40°C erwärmt. Dies geschieht in einem NT-Wärmespeicher oder -boiler 12. Das in der Temperatur angehobene Wasser wird über eine Leitung 14, beispielsweise auf eine Abzweigung 16, geführt, von wo es entweder über eine Leitung 25 in die HT-Stufe 20 oder über eine Leitung 15 in die Misch-/Verteilerstufe 30 gelangt. Das vortemperierte Wasser kann auch in beide Stufen gleichzeitig einfliessen.

In der HT-Stufe 20 wird das von der NT-Stufe 10 über die Leitung 25 zufliessende, vorgewärmte Wasser in den HT-Wärmespeicher oder -boiler 22 geführt und darin weiter erwärmt. Die dafür verwendeten HT-Wärmequellen sind überlicherweise Erdölenergie, Elektroenergie, Kohleenergie, aber auch kostengünstige Zusatzenergien wie Fernwärme, Biogas, Solarwärme u.a., so sie als Hochtemperaturenergiequellen benützt werden können. In der HT-Stufe wird das Wasser auf eine Temperatur, z.B. zwischen 60°C und 65°C, weitererwärmt. Das im HT-Boiler erwärmte Wasser gelangt über eine Leitung 35 in einen zur Misch-/Verteilerstufe 30 gehörenden Mischer/ Verteiler 32, der ausser dem HT-Wasseranschluss 39 einen weiteren NT-Wasseranschluss 38 aufweist. Damit ist durch Mischung im Mischer/Verteiler 32 gemäss diesem Beispiel jede Wassertemperatur zwischen 40°C und 65°C herstellbar; gemäss Figur 1 also jede Temperatur des vorgesehenen Temperaturprogramms. Die Funktionsweise des Mischer/Verteilers 32 ist in der DE-A 2 231 231 eingehend und detailliert beschrieben.

Eine Rückleitung des HT-Wassers aus der Misch-/Verteilerstufe 30 in die HT-Stufe 20 führt über die Leitung 37. Es ist dabei zu beachten, dass gemäss dem erfinderischen Verfahren eine Zapfpause für HT-Wasser und nicht eine Zapfpause für Warmwasser überhaupt bedeutet; NT-Wasser kann während einer HT-Wasserzapfpause über die Leitung 15 weiterfliessen, beispielsweise für Duschzwecke oder ein Vollbad, für welches HT-Wasser beispielsweise nicht verwendet wird. Die Verwendung von HT-Wasser ist übergeordnet durch das vorgegebene Temperaturprogramm gesteuert und untergeordnet durch die Mischung der beiden zugeführten HT-Wasser und NT-Wasser.

Vom Mischerverteiler 32 fliesst das Gebrauchswarmwasser über eine Leitung 45 in die Verbraucherstufe 40 an den Verbrauchsort 42 mit den entsprechenden Zapfstellen und von dort über die Zirkulationsleitung 47 wieder zurück zum Mischer/Verteiler 32. Das in den beiden Leitungen 45, 47 zwischen der Misch-/Verteilerstufe 30 und der Verbraucherstufe 40 zirkulierende Wasser ist entweder nur Hochtemperaturwasser, nur Niedertemperaturwasser oder Mischwasser.

Eine schaltungs- oder programmgesteuerte Steuereinheit 100 empfängt aus jeder Stufe Stell-, Temperatur- u.a. Zustandsinformationen und überträgt dazu entsprechende, programmmässig festgelegte Steuer- und/oder Stellinformationen in die einzelnen Stufen. Solch eine Steuereinheit 100 kann aber auch weitere Einrichtungseinheiten 10′, 20′, 30′, 40′ programmässig versorgen; dies ist durch nach unten gerichtete Doppelpfeile auf die einer anderen Einheit zugehörigen Stufen 10′, 20′, 30′, 40′ angezeigt.

Weiterhin ist in diesem übergeordneten Zusammenhang zu beachten, dass im Niedertemperaturboiler, und dies im Gegensatz zum Hochtemperaturboiler, keine Wasserumwälzung durch Zirkulation stattfindet. Es handelt sich hier um einen thermisch geschichteten Boiler mit einem vorgesehenen Temperaturgradienten, bei dem auf eine Wasserrückführung bewusst verzichtet wird. Die Schichtung entspricht der Dichte des Wassers im Gravitationsfeld, alle technischen Massnahmen wie Zu- und Wegführung des kalten bzw. warmen Wassers sind so angelegt, dass die Ausbildung des Temperaturgradienten parallel zur Gravitation nicht stark gestört wird; dies gilt auch für die konvektionsströmungserzeugenden Wärmeaustauscher. Bei dieser Massnahme ist die Wärmeaustauschkapazität beinahe maximal.

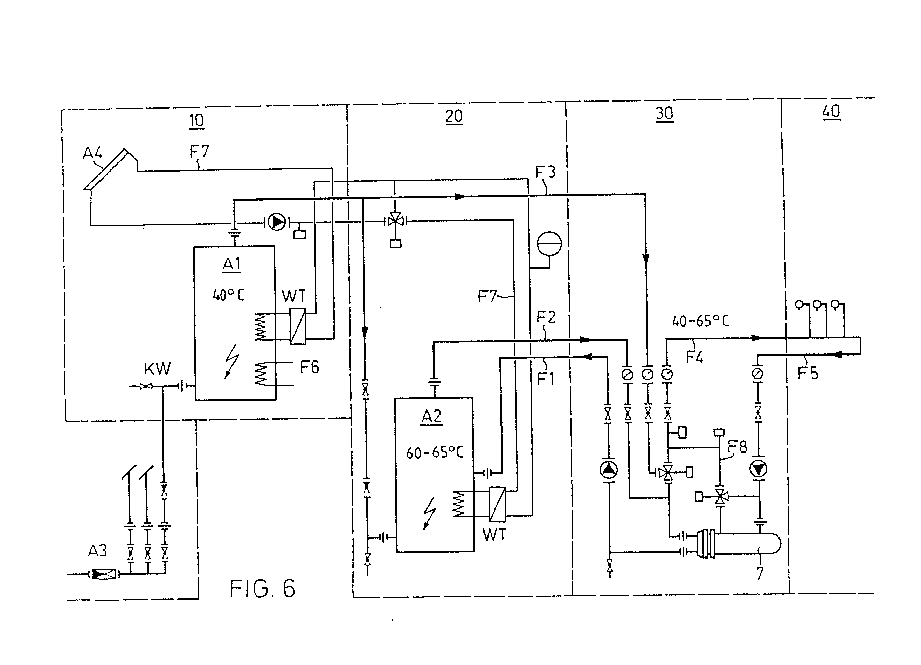

Figur 6 zeigt nun das Hydraulikschema einer beispielsweisen Einrichtung zur Durchführung des Verfahrens gemäss Erfindung. Da es sich um eine vereinfachte Darstellung handelt, sind dem Fachmann naheliegende Details entsprechend weggelassen. Zudem ist in diesem Beispiel eine Lösung mit solarer Zusatzenergie dargestellt; problemlos kann anstelle der Sonnenkollektoren eine Wärmepumpe die Niedertemperatur erzeugen. Der vorgesehene NT-Speicher würde entsprechend als Wärmepumpenspeicher wirken. In Anlehnung an Figur 5 sind einzelne Funktionsblöcke hervorgehoben, die den entsprechenden Stufen der Figur 5 entsprechen und auch mit den gleichen Ziffern bezeichnet sind. Die Niedertemperaturstufe 10 umfasst einen Sonnenkollektor A4 mit den ihm zugeordneten Leitungen F7, einen Kaltwasservorspeicher A1 entsprechend dem Niedertemperaturspeicher 12, einen Wärmeaustauscher WT zur Übertragung der Niedrigtemperaturwärme aus dem Sonnenkollektor einer hier nicht benützten, aber doch vorgesehenen Wärmerückgewinnung F6, einem Anschluss KW für das Kaltwasser aus einer Kaltwasserverteilerbatterie A3 sowie der Möglichkeit einer beispielsweise elektrischen Zusatzheizung. Das entsprechende Niedertemperaturleitungssystem ist mit F3 bezeichnet. Die Hochtemperaturstufe 20 besteht aus einem Warmwasserboiler A2 mit einer Zuführung von NT-Wasser aus dem Leitungssystem F3, einem Wärmeaustauscher WT zur Übertragung von Niedrigtemperaturwärme aus dem Sonnenkollektorsystem A4 über das Leitungssystem F7 sowie Anschlüssen für die Leitungen F1 und F2, durch die eine HT-Wasserzirkulation in angegebener Pfeilrichtung durchgeführt wird. Der Hochtemperaturspeicher A2 ist ebenfalls ausgerüstet, um mit Zusatzenergie, beispielsweise elektrischer Energie oder Ölfeuerung, beheizt zu werden. Zwei Leitungen, die Leitung F3 für das NT-Wasser und die Leitung F2 für das HT-Wasser führen in die Verteilerstufe 30, in der schliesslich das Mischwasser erzeugt wird. Ein Wärmeaustauscher 7 wird durch den Hochtemperaturwasserkreislauf in den Leitungen F1 und F2 via den HT-Speicher A2 auf Betriebstemperatur gehalten. Ein weiterer, auf diesen Wärmeaustauscher führender Kreislauf ist durch das Leitungssystem F4, F5 und F8 dargestellt. Das letztere Leitungssystem führt den Mischwasserkreislauf der im Wärmeaustauscher 7 auf der vorgegebenen Mischwassertemperatur gehalten wird. Dieser Mischwasserkreislauf führt über die Leitungen F4 und F5 in die Verbraucherstufe 40 zu den entsprechenden Zapfstellen und wird durch eine diesem Kreislauf angeordnete Pumpe in Betrieb gehalten. Diverse in der Verteileranlage angebrachte Temperaturfühler steuern die entsprechenden Motorventile zur adäquaten Mischung des angebotenen Brauchwassers bzw. zur Umschaltung von Hochtemperaturwasser oder Niedertemperaturwasser zu den Zapfstellen.

Aus diesem Hydraulikschema ist das Zusammenspiel der beiden Speicher für Hoch- und Niedertemperatur direkt ersichtlich. Ein starkes Absinken des Energieinhaltes im Niedertemperaturspeicher kann temporär durch den Energieinhalt aus dem Hochtemperaturspeicher durch Zumischen kompensiert werden. In den Zapfpausen, aber auch während der Zapfzeiten, wird im Niedertemperaturspeicher die Temperatur durch Wärmepumpen- oder Solarenergie wieder angehoben; im Hochtemperaturspeicher geschieht dies durch Elektro- oder Ölfeuerung, und zwar in Einschaltzeiten, die den Energiepulsen P in Figur 4 entsprechen. Eine zusätzliche Programmierung in der elektrischen Schaltung zur Ventilsteuerung regelt das Ein- und Ausschalten während der Verbrauchsspitzen. Da diese Spitzenverbräuche u.a. auch an Hochtemperaturwasser mit kostengünstiger Niedrigtemperatur nicht zu bewältigen ist, wird in eingeschränktem Mass Erdöl oder Elektroenergie eingesetzt und dies in wirtschaftlichster Weise. Wie schon erwähnt, ist es möglich, dass 80% des Warmwasserverbrauchs durch Niedrigtemperaturenergie gedeckt werden kann; die restlichen 20% bringt die Ölfeuerung oder die Elektroheizung. Damit sind grosse Speicher, wie sie bei herkömmlichen Systemen für grössere Objekte unumgänglich wären, nicht mehr nötig. Eine Amortisierung des Zusatzaufwandes innerhalb drei bis fünf Jahren ist, wie dies die nachfolgenden Berechnungen zeigen, möglich.

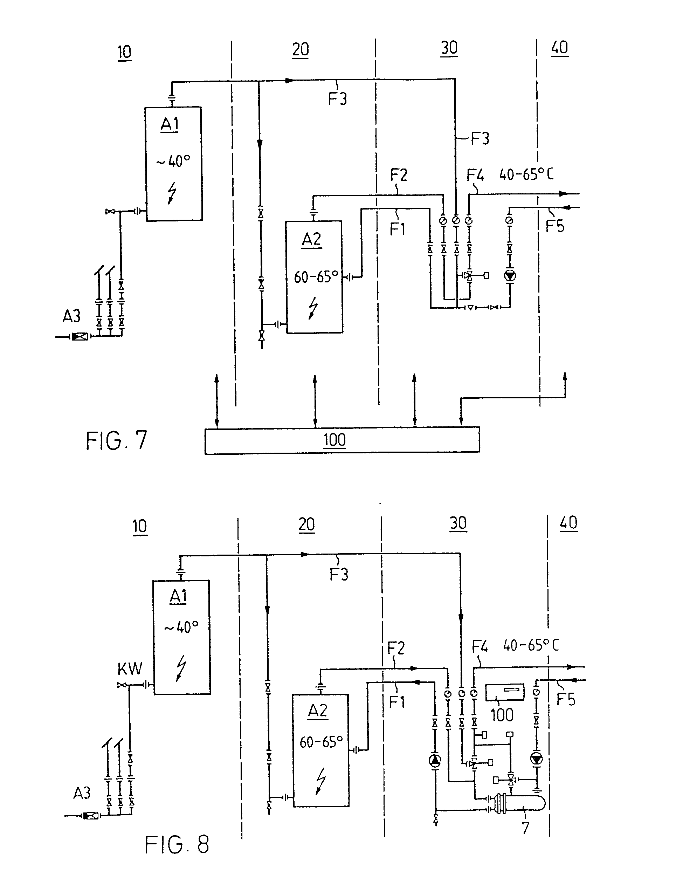

Die Figuren 7 und 8 zeigen die Hydraulikschemas zweier Grundeinheiten der Einrichtung gemäss Erfindung mit den entsprechenden Stufen: NT-Stufe 10 zur Vorwärmung des Brauchwassers mit Alternativenergie, hier Wärmepumpen-Wärmeenergie; HT-Stufe 20 zur Erwärmung des Brauchwassers auf eine Wärmestufe für die Defizitdeckung; Verteil-/Mischstufe 30, in der erfindungsgemäss das HT-Wasser mit NT-Wasser auf Brauchwassertemperatur gemischt wird, wobei es für die Erfindung unerheblich ist, ob die Verteilstufe 30 aus einer einfachen Verteilbatterie nach Figur 7 oder einer Verteilbatterie mit Rückzirkulation und Wärmeaustauscher 7, wie dies Figur 8 zeigt, besteht. Allerdings wird durch die in Figur 8 gezeigte Rückzirkulation über den Wärmeaustauscher und nicht über die HT-Stufe, wie in Figur 7 gezeigt, der Wirkungsgrad abermals erhöht bzw. die Warmwasseraufbereitungskosten nochmals gesenkt. Die Verbraucherstufe 40 in beiden Figuren schliesst die Grundeinheit ab. Eine entsprechend angeordnete Steuerung der Steuereinheit 100 ist für die Fühl-, Regel- und Stellorgane vorgesehen.

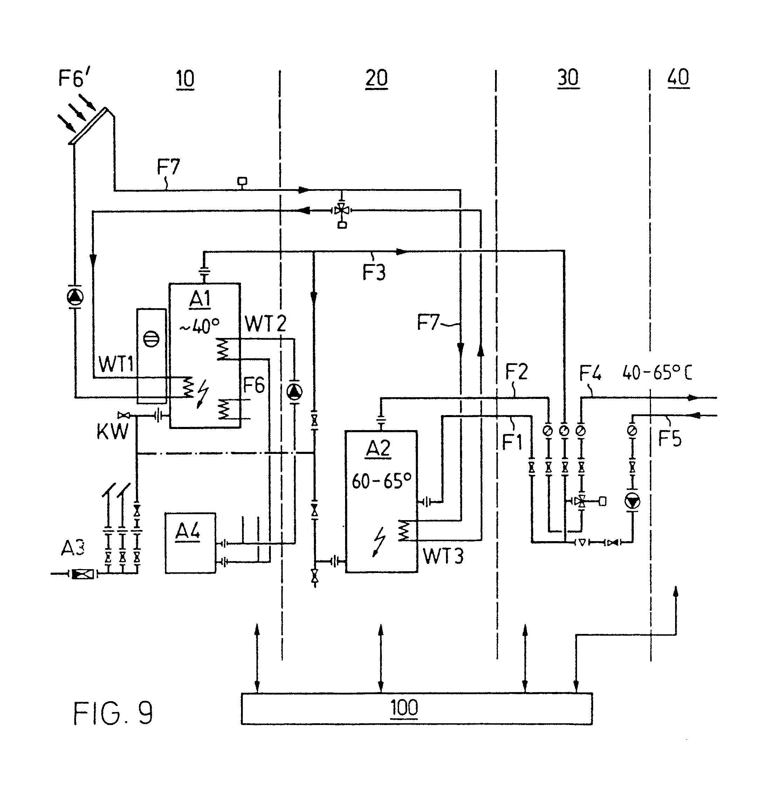

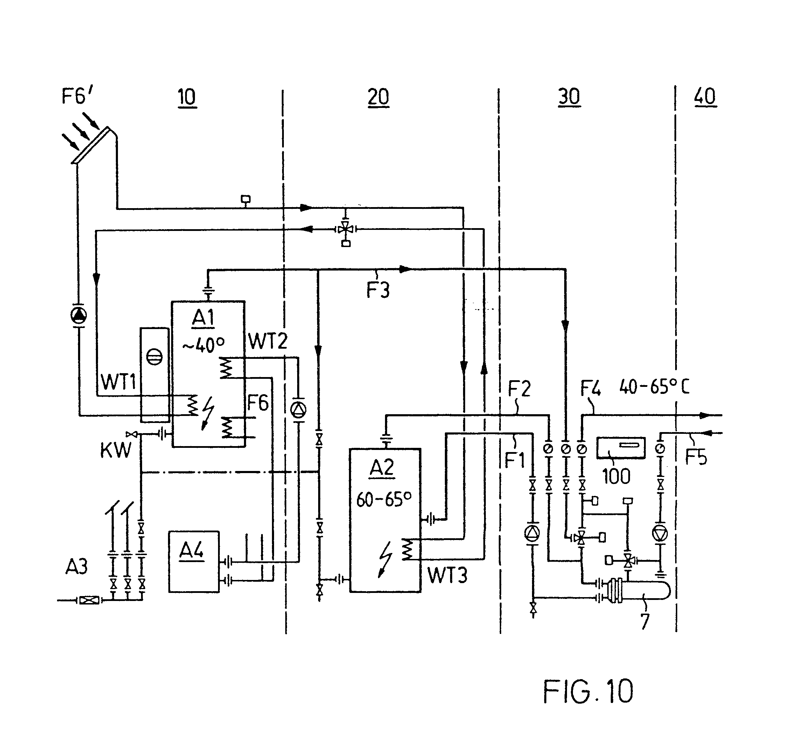

Die Figuren 9 und 10 zeigen eine weiter ausgebaute Ausführungsform, in diesem Beispiel wiederum mit Solarwärme betriebene NT-Stufen 10, in der die NT-Stufe aber ausserdem eine weitere Alternativwärmequelle A4 aufweist, die beispielsweise Biogaswärme, Fernwärme, u.a. liefert, jedenfalls Energie eines höheren Wärmegrades. Zu beachten ist, dass die diversen Wärmeaustauscher WT entlang des Wärmegradienten in verschiedenen Wärmezonen oder -schichten angeordnet sind, je nach Temperatur der abgegebenen Wärme.

Zuunterst im Speicher A1 wird das spezifisch dichte Kaltwasser am Eingang KW eingebracht. Etwas darüber, also in höherer Schichtung, ist ein Wärmetauscher für die Zuführung F6, in der beispielsweise Niedertemperaturabwärme oder -rückwärme zirkuliert und mit möglichst grossem Wirkungsgrad in der kältesten Schicht des Speichers ausgetauscht wird. Weiter oben, also in schon vorgewärmter Schicht und damit mit etwas herabgesetztem Wirkungsgrad, wird die Solarwärme über den Wärmetauscher zugeführt und, in diesem Beispiel, noch weiter oben der Wärmetauscher mit der höchsten Energiekonzentration.

Es ist klar, das der Wirkungsgrad des Wärmeüberganges der beiden letzteren Wärmetauscher in auch temperaturmässig tieferen Schichten ein höherer wäre, doch würde bei Ausnützen des maximalen Wirkungsgrades einzelner Wärmetauscher Wärmemengen von niedrigem Energiegehalt nicht mehr genützt werden können. Ausserdem würde die natürliche, durch Dichteunterschiede hervorgerufene Konvektion des Mediums zu stark, als dass Wärmemengen verschiedener Herkunft und verschiedener Temperatur in ein und demselben Speicher eingebracht werden können. Gesamthaft erhöht diese Massnahme den Wirkungsgrad des Speichers, wobei die einzelnen Wärmetauscher hinsichtlich des Gesamtwirkungsgrades optimal und nicht maximal eingesetzt werden.

Bei genügend grossem Sonneneinfall und hohem Wirkungsgrad der Sonnenkollektoren F6 fällt zeitweise hochtemperiertes Wasser bis zu 90°C an, das dann direkt in die HT-Stufe 20 geleitet wird (wie dies übrigens auch in Figur 6 dargestellt ist), um dessen Energie dort im Boiler A2 auszutauschen. Damit können zusätzliche Energiemengen, wie sie als Heizimpulse P in Figur 4 dargestellt sind, über lange Tageszeiten ausfallen und so beispielsweise teure Heizölenergie eingespart werden. Weiterhin ist die Misch-/Verteilstufe 30 einmal in Figur 9 als einfache Verteilbatterie mit Rückzirkulation F1, F2 in dem Boiler A2 und in Figur 10 über einen Wärmetauscher 7, also hydraulisch vom Boiler A2 getrennt, ausgeführt.

Als Abwärme kann Wärmeenergie aus Bügelmaschinen, Tumblern, Kühlanlagen, Küchenwärmen usw. zum Übertragen auf den NT-Speicher verwendet werden. Dies gilt vor allen Dingen in Grossobjekten wie Spitälern, Hotels, Kasernen etc. Rückwärme wird meist aus warmem Abwasser gewonnen. Durch die Wärmeschichtung ist es in sehr grossen NT-Speichern möglich, jede Wärmeenergie verschiedener Quellen adäquat rückzunutzen.

Die nun nachfolgend gegebene Kostenübersicht zeigt die Wirksamkeit des erfindungsgemässen Verfahrens und der Einrichtung zur Durchführung des Verfahrens an einem Mehrfamilienwohn- und Geschäftshaus mit acht Wohnungen, bei welchem Objekt Einsparungen der Warmwasserkosten über das Jahr gerechnet von fast 78% möglich sind. Dies will heissen, dass die Aufwendungen für Warmwasser durch eine Sanierung gemäss Erfindung an diesem Objekt nur noch ein Sechstel der vorherigen Aufwendungen betragen. Da es sich bei diesem Objekt um ein mit Erdöl beheiztes Wohnhaus handelt, ist natürlich die Einsparung an Heizöl prozentual geringer, da die Heizung insgesamt mitberücksichtigt werden muss. Immerhin lässt sich an den Gesamtheizölkosten für Warmwasser und Heizung rund ein Drittel einsparen.

Zusammenstellung für Warmwasserkosten des beschriebenen Beispiels (und gemäss Messstreifen nach Figur 4)

| | | |
|---|---|---|
| Warmwasserkosten vor der Sanierung | | Fr. 5237.— |
| Warmwasserkosten nach der Sanierung Wärmepumpe | | |
| von 10 auf 42°C | Fr. 928.— | |
| Nachtstrom | | |
| von 42 auf 57°C | Fr. 172.— | Fr. 1174.— |
| Einsparung pro Jahr | | Fr. 4063.— |
| auf Öl berechnet mit Nachtstrom zurzeit entsprechend billiger | | 77,6% |
| Heizölverbrauch vor der Sanierung für WW-Aufbereitung | | 6983 kg |
| Heizölverbrauch nach der Sanierung für WW-Aufbereitung | | 230 kg |
| Heizöleinsparung nach der Sanierung | | 6753 kg |
| | = | 96,7% |

## Patentansprüche

1. Verfahren zur automatischen Bereitung und Verteilung von warmem Misch- oder Brauchwasser in mindestens zwei Temperaturbereichen, dadurch gekennzeichnet, dass die Zapfstelle zeitlich begrenzt Wasser aus einem höheren Temperaturbereich erhält und dass Wasser aus einem niederen Temperaturbereich der Zapfstelle in den dazwischenliegenden, grösseren Zeitabschnitten zugeführt wird.

2. Verfahren nach Anspruch 1, dadurch gekennzeichnet, dass das Brauchwasser des höheren Temperaturbereiches aus Brauchwasser des niederen Temperaturbereichs durch Zusatzerwärmung bereitet wird.

3. Verfahren nach Anspruch 2, dadurch gekennzeichnet, dass das Brauchwasser des höheren Temperaturbereichs ein Mischwasser ist, das aus Wasser mit einer über der Mischtemperatur liegenden Temperatur und aus vorgewärmtem Wasser, mit einer Temperatur niedriger als die Mischtemperatur hergestellt ist.

4. Verfahren nach Anspruch 3, dadurch gekennzeichnet, dass Brauchwasser des niederen Temperaturbereichs mit Niedertemperaturwärmeenergie aus Sonnenkollektoren und/oder Wärmepumpen und Brauchwasser des höheren Temperaturbereichs durch Zumischung von mit Elektro- und/oder Ölfeuerungsenergie erwärmtem Wasser hergestellt wird.

5. Verfahren nach Anspruch 3, dadurch gekennzeichnet, dass Brauchwasser des niedigeren Temperaturbereichs aus Abfallwärme hergestellt wird und Brauchwasser des höheren Temperaturbereichs durch Zumischung von mit Sonnenenergie, Kohleenergie, Biogasenergie, Elektroenergie oder Ölenergie erwärmtem Wasser hergestellt wird.

6. Verfahren nach den Ansprüchen 3, 4 und 5, dadurch gekennzeichnet, dass Brauchwasser des niedrigeren Temperaturbereichs durch Zuführung von Energie verschiedener Temperaturstufen so in einen Wasserwärmespeicher eingebracht wird, dass sich ein Temperaturgradient ausbildet.

7. Verfahren nach Anspruch 6, dadurch gekennzeichnet, dass im Speicher für die niedrigere Temperatur keine Rezirkulation mit anderen Speichern stattfindet.

8. Einrichtung zur Durchführung des Verfahrens nach Anspruch 1, dadurch gekennzeichnet, dass sie mindestens eine Vorrichtung (10) mit einer Niedertemperaturstufe (10) aufweist, die über Leitungen (14, 15, 16, 25) mit einer Hochtemperaturstufe (20) einerseits und einer Verteilerstufe (30) andererseits verbunden ist, dass zwischen der Hochtemperaturstufe (20) und der Verteilerstufe (30) gegenseitig zuführende Leitungen (35, 37) bestehen, dass zirkulierendes Misch- oder Brauchwasser führende Leitungen (45, 47) die Verteilerstufe (30) mit der Verbraucherstufe (40) verbinden und dass eine Programmschalteinheit (100) zur Aufnahme von Zustandinformationen zur Steuerung von Schaltorganen im Leitungsnetz vorhanden ist.

9. Einrichtung nach Anspruch 8, dadurch gekennzeichnet, dass sie mehr als eine Vorrichtung (10, 20, 30, 40) mit einer Niedertemperatur- (10), einer Hochtemperatur- (20), einer Verteiler- (30) und einer Verbraucherstufe (40) aufweist, die an einer zentralen Programmschalteinheit (100) angeschlossen sind.

10. Einrichtung nach Anspruch 9, dadurch gekennzeichnet, dass sie mehrere zusammengeschaltete Programmschalteinheiten (100, 100', 100") mit den zugeordneten Vorrichtungen (10, 20, 30, 40; 10', 20', 30', 40'; 10", 20", 30", 40"; ...) zur systematischen Verschiebung der Wärmeenergie aufweist.

11. Einrichtung nach Anspruch 9, dadurch gekennzeichnet, dass die Niedertemperaturstufe (10) ein Wärmespeicher (A1) mit in zur Gravitation verschiedenen Höhen angeordneten Wärmetauschern (WT1, WT2, F6) ist.

12. Einrichtung nach Anspruch 11, dadurch gekennzeichnet, dass der Kaltwassereinlass (KW) an möglichst tiefster Stelle und der Warmwasserauslass (F3) an möglichst höchster Stelle des Speichers angeordnet ist.

13. Einrichtung nach den Ansprüchen 8, 11 und 12, gekennzeichnet durch Anordnung von mindestens zwei mit verschiedenen Temperaturen betriebenen Wärmetauschern.

14. Einrichtung nach Anspruch 13, gekennzeichnet durch mit Solarwärme und/oder Wärmepumpenwärme betriebene Wärmetauscher.

15. Einrichtung nach Anspruch 13, gekennzeichnet durch mit Abwärme und/oder Solarwärme betriebene Wärmetauscher.

16. Einrichtung nach Anspruch 13, gekennzeichnet durch mit Biogaswärme und/oder Wärmepumpenwärme betriebene Wärmetauscher.

17. Einrichtung nach Anspruch 13, gekennzeichnet durch mit Elektrowärme und/oder Wärmepumpenwärme betriebene Wärmetauscher.

18. Einrichtung nach Anspruch 13, gekennzeichnet durch mit Elektrowärme und/oder Solarwärme betriebene Wärmetauscher.

19. Einrichtung nach den Ansprüchen 14 bis 18, gekennzeichnet durch einen zusätzlichen Wärmetauscher für Abfallwärme wie Wärme aus Tumblern, Bügelmaschinen, Kühlanlagen etc.

20. Einrichtung nach den Ansprüchen 8 bis 19, gekennzeichnet durch einen zusätzlichen Wärmetauscher (WT3) im Boiler (A2) der HT-Stufe (20) für die Zuführung von Solarenergie.

21. Einrichtung nach Anspruch 20, gekennzeichnet durch den Betrieb des zusätzlichen Wärmetauschers (WT3) mit Hochtemperatur-Alternativenergie.

## Claims

1. Method for automatic preparation and distribution of warm water for consumption and heating purposes, with at least two temperature ranges, characterized in that the tap connection during limited periodes receive water of a high temperature and during larger periodes therebetween receives water of a lower temperature.

2. Method according to claim 1, characterized in that the consumption water in the higher temperature range is prepared by means of additional heating of consumption water from the lower temperature range.

3. Method according to claim 2, characterized in that the consumption water of the higher temperature range is mixed water, prepared from water with a temperature above the mixed water temperature and pre-warmed water with a temperature below the temperature of the mixed water.

4. Method according to claim 3, characterized in that the consumption water in the lower temperature range is prepared by means of low temperature heating energy from solar energy collectors and/or heat pumps, and the consumption water in the higher temperature range by the addition of water heated by means of an electrical and/or an oil-burning installation.

5. Method according to claim 3, characterized in that the consumption water in the lower temperatur range is heated by means of waste heat, and that the consumption water in the higher temperature range is prepared by adding water heated by means of solar, biogas, electrical or oil- or coal-burning energy.

6. Method according to the claims 3, 4 and 5, characterized in that the consumption water in the lower temperature range is produced by supplying energy of different temperature stages to a hot-water tank, so that a temperature gradient results.

7. Method according to claim 5, characterized in that no recirculation with other tanks exists in the lower temperature tank.

8. Device for performing the method defined in claim 1, characterized in that it contains at least one means (10) with a low-temperature stage (10), which is connected by pipes (14, 15, 16, 25) to a high-temperature stage (20) on one side and with a distribution stage (30) on the other side, that between the high-temperature stage (20) and the distribution stage (30) pipes (35, 37) for reciprocal supplies exist, that pipes (45, 47) conducting circulating mixed and consumption water connect the distribution stage (30) with the consumption stage (40), and that a programme switching unit (100) receives informations as to the actual situation for the control of the switching units in the pipe network.

9. Device according to claim 8, characterized in that it comprises more than one means (10, 20, 30, 40) with a lower temperature (10), a higher temperature (20), a distribution (30) and a consumption stage (40), which are connected to a central programme switching unit (100).

10. Device according to claim 9, characterized in that it comprises several interconnected programme switching units (100, 100', 100") with the coordinated means (10, 20, 30, 40; 10', 20', 30', 40'; 10", 20", 30", 40"; ...) for systematic allocation of the heat energy.

11. Device according to claim 9, characterized in that the lower temperature stage (10) is a heat accumulator (A1) with heat exchange units (WT1, WT2, F6) for gravitation at different levels.

12. Device according to claim 11, characterized in that the cold water inlet (KW) is placed at the lowest possible location, and the hot water outlet (F3) at the highest possible location of the accumulator.

13. Device according to claim 8, 11 and 12, characterized by the arrangement of at least two heat exchange units operated by means of different temperatures.

14. Device according to claim 13, characterized by heat exchange units operated by means of solar energy and/or heat pumps.

15. Device according to claim 13, characterized by heat exchange units operated by means of waste heat and/or solar energy.

16. Device according to claim 13, characterized by heat exchange units operated by means of bio gas and/or heat pump heat.

17. Device according to claim 13, characterized by heat exchange units operated by means of electric and/or heat pump heat.

18. Device according to claim 13, characterized by heat exchange units operated by means of electric and/or solar heat.

19. Device according to claims 14 to 18, characterized by an additional heat exchange unit for waste heat, as heat from tumblers, ironing machines, cooling units and so forth.

20. Device according to claim 8 to 19, characterized by an additional heat exchange unit (WT3) in a boiler (A2) of the lower temperature stage (20) for the supply of solar energy.

21. Device according to claim 21, characterized by the operation of an additional heat exchange unit (WT3) by means of higher temperature alternative energy.

**Revendications**

1. Procédé de préparation et de distribution automatiques d'eau chaude de mélange ou de consommation suivant au moins deux domaines de températures, caractérisé en ce que la prise d'eau reçoit pendant un temps limité de l'eau provenant d'un domaine de températures plus élevées et en ce que de l'eau provenant d'un domaine de températures moins élevées est amenée à la prise d'eau pendant des intervalles de temps intermédiaires assez grands.

2. Procédé selon la revendication 1, caractérisé en ce que l'eau de consommation du domaine de températures plus élevées est préparée à partir d'eau provenant du domaine de températures moins élevées par un chauffage supplémentaire.

3. Procédé selon la revendication 2, caractérisé en ce que l'eau de consommation du domaine de températures plus élevées est une eau de mélange qui est obtenue à partir d'eau à une température supérieure à la température de mélange et d'eau préchauffée à une température inférieure à la température de mélange.

4. Procédé selon la revendication 3, caractérisé en ce que l'eau de consommation du domaine de températures moins élevées ayant une énergie calorifique à basse température est préparée dans des collecteurs solaires et/ou des pompes à chaleur et que de l'eau de consommation du domaine de températures plus élevées est préparée par addition d'eau chauffée par apport d'énergie électrique et/ou de combustible liquide.

5. Procédé selon la revendication 3, caractérisé en ce que l'eau de consommation du domaine de températures moins élevées est préparée à partir de chaleur de récupération et en ce que l'eau de consommation du domaine de températures plus élevées est préparée par addition d'eau chauffée par énergie solaire, énergie du charbon, énergie de biomasse, énergie électrique ou énergie de combustibles liquides.

6. Procédé selon les revendications 3, 4 et 5, caractérisé en ce que l'eau de consommation du domaine de températures moins élevées est, par suite d'un apport d'énergie à différents niveaux de température, introduite dans un réservoir d'eau chaude dans des conditions telles qu'il s'établit un gradient de température.

7. Procédé selon la revendication 6, caractérisé en ce que, dans le réservoir pour la température la moins élevée, il n'y a pas de recyclage avec d'autres réservoirs.

8. Installation pour l'application du procédé selon la revendication 1, caractérisée en ce qu'elle comprend au moins un dispositif (10) à bas niveau de température (10) qui, par des canalisations (14, 15, 16, 25), est relié, d'une part, à un niveau à haute température (20) et, d'autre part, à un niveau de distribution (30), en ce qu'entre le niveau à haute température (20) et le niveau de distribution (30) elle comprend des canalisations (35, 37) d'amenée en sens inverse, en ce que des canalisations (45, 47) dans lesquelles circule de l'eau de mélange ou de l'eau de consommation relient le niveau de distribution (30) au niveau d'utilisation (40) et en ce qu'elle comprend une unité de commutation à programme (100) conçue pour recevoir des informations en vue de la commande d'organes de commande montés dans le réseau des canalisations.

9. Installation selon la revendication 8, caractérisée en ce qu'elle comprend plus d'un dispositif (10, 20, 30, 40) comportant un niveau (10) à basse température (10), un niveau à haute température (20), un niveau de distribution (30) et un niveau d'utilisation (40) qui sont reliés à une unité centrale de commutation à programme (100).

10. Installation selon la revendication 9, caractérisée en ce qu'elle comprend plusieurs unités de consommation à programme (100, 100', 100''), avec les dispositifs correspondants (10, 20, 30, 40; 10', 20', 30', 40'; 10'', 20'', 30'', 40'') pour le décalage systématique de l'énergie thermique.

11. Installation selon la revendication 9, caractérisée en ce que le niveau à basse température (10) est constitué par un accumulateur de chaleur (A1) comportant des échangeurs de chaleur (WT1, WT2, F6) placés à différentes hauteurs par rapport à la pesanteur.

12. Installation selon la revendication 11, caractérisée en ce que l'entrée d'eau froide (KW) est placée au point le plus bas possible et la sortie

d'eau chaude (F3) au point le plus haut possible dans le réservoir.

13. Installation selon les revendications 8, 11 et 12, caractérisée en ce qu'elle comprend au moins deux échangeurs de chaleur fonctionnant à des températures différentes.

14. Installation selon la revendication 13, caractérisée en ce qu'elle comprend des échangeurs de chaleur utilisant de la chaleur solaire et/ou la chaleur de pompes à chaleur.

15. Installation selon la revendication 13, caractérisée en ce qu'elle comprend des échangeurs de chaleur utilisant de la chaleur de récupération et/ou de chaleur solaire.

16. Installation selon la revendication 13, caractérisée en ce qu'elle comprend des échangeurs de chaleur utilisant de la chaleur de biomasse et/ou de la chaleur de pompes à chaleur.

17. Installation selon la revendication 13, caractérisée en ce qu'elle comprend des échangeurs de chaleur utilisant de la chaleur produite par l'électricité et/ou de chaleur de pompes à chaleur.

18. Installation selon la revendication 13, caractérisée en ce qu'elle comprend des échangeurs de chaleur utilisant de la chaleur produits par l'électricité et/ou de la chaleur solaire.

19. Installation selon les revendications 14 à 18, caractérisée en ce qu'elle comprend en échangeur de chaleur supplémentaire utilisant de la chaleur de récupération comme la chaleur provenant de cuves, de machines à repasser, de réfrigérateurs, etc.

20. Installation selon les revendications 8 à 19, caractérisée en ce qu'elle comprend un échangeur de chaleur supplémentaire (WT3) monté dans le chaudière (A2) du niveau à haute température (20) pour l'amenée d'energie solaire.

21. Installation selon la revendication 20, caractérisée en ce que l'échangeur de chaleur supplémentaire (WT3) utilise de l'énergie alternative à haute température.

FIG. 1

FIG. 2

FIG. 3

FIG. 4

0 085 774

**10** NT-STUFE
RÜCKWÄRME
SOLARWÄRME
WÄRMEP.WÄRME

**20** HT-STUFE
ZUSATZWÄRME
ELEKTROWÄRME
ÖL/KOHLE

**30** VERTEIL-STUFE

**40** VERBRAUCH.STUFE

KW  5
12
35-40°C  14
16  15
25
22
60-65°C  35
39
32
HT
37
PRIM. CIRCUL.
NT
38
45
SEC. CIRCUL.
47
42

ABWÄRME
BIOGASWÄRME
ELEKTROWÄRME

SOLARWÄRME

100

10'  20'  30'  40'

FIG. 5

FIG. 6

FIG. 7

FIG. 8

FIG. 9

FIG.10